# FASCICULE DE BREVET EUROPEEN

(11) **EP 1 862 009 B1**
(45) Date de publication et mention de la délivrance du brevet: **22.11.2017**
(21) Numéro de dépôt: 06725239.5
(22) Date de dépôt: 22.03.2006
(51) Int. Cl.: H04N 7/24

(54) **PROCEDE D'ENVOI DE COMMANDE A UN SERVEUR DE FLUX DE DONNEES NUMERIQUES ET APPAREIL IMPLEMENTANT LE PROCEDE**
VERFAHREN ZUM SENDEN EINES BEFEHLS ZU EINEM DIGITALDATENFLUSSSERVER UND ZUR IMPLEMENTIERUNG DES VERFAHRENS VERWENDETE VORRICHTUNG
METHOD OF SENDING A COMMAND TO A DIGITAL DATA FLOW SERVER AND APPARATUS USED TO IMPLEMENT SAID METHOD

(30) Priorité: 25.03.2005 FR 0503011
(43) Date de publication de la demande: 05.12.2007
(73) Titulaire: Thomson Licensing, 92130 Issy-les-Moulineaux (FR)
(72) Inventeur: COLMAGRO, Jean-Claude, F-35250 Mouaze (FR); MERCIER, Benoit, F-35530 Noyal s/ Vilaine (FR); QUERRE, Thierry, F-35160 Monfort s/ Meu (FR)
(74) Mandataire: Rolland, Sophie
(86) Numéro de dépôt international: PCT/EP2006/060956
(87) Numéro de publication internationale: WO 2006/100268

(56) Documents cités:
- EP-A- 1 439 700
- WO-A-03/010970
- "ISO/IEC IS 13818-6:1998, Extensions for DSM-CC" ISO/IEC, 1 septembre 1998 (1998-09-01), pages 137-139, XP002366278
- "ISO/IEC IS 13818-6:1998, Extensions for DSM-CC" ISO/IEC, 1 septembre 1998 (1998-09-01), pages 280-281, XP002366279
- "ISO/IEC JCT1/SC29/WG11/N5270: Corrected text of ITU-T Rec H.222.0 ISO/IEC 13818-1:2000/FDAM 1: carriage of metadata" ISO/IESC, janvier 2003 (2003-01), pages 1-23, XP002361915

## Description

La présente invention concerne le domaine du contrôle par un récepteur d'un serveur de contenu à la demande. Plus particulièrement dans le cas où le serveur diffuse » son contenu sous la forme d'un flux de données numérique via un réseau IP.

L'IETF (« Internet Engineering Task Force » en anglais) a défini, notamment dans la RFC (« Request For Comment » en anglais) 2326, un protocole de commande de serveurs de flux de données numériques. Ce protocole, appelé RTSP (« Real Time Streaming Protocol » en anglais), permet de commander un serveur, d'ouvrir une session, de demander le lancement d'un programme, son arrêt temporaire, sa reprise où son arrêt définitif.

Il est donc possible, à l'aide de RTSP, d'implémenter des modes de restitutions particuliers des programmes (« Trick Modes » en anglais). Ces modes permettent d'apporter les commandes auxquelles les utilisateurs sont habitués sur un magnétoscope, à la visualisation de programmes diffusés sur IP. On peut citer dans ces modes l'avance rapide et le retour arrière, ainsi que le positionnement à des endroits préalablement repérés dans le programme.

La plupart des commandes RTSP, notamment la commande « Play » impliquée dans les modes de restitution particuliers, nécessitent un paramètre donnant la référence temporelle de la plage du programme que l'on souhaite repérée par un intervalle entre une référence de début et une référence de fin. Le client RTSP doit donc être en mesure de connaître précisément la localisation temporelle courante dans le fichier joué. Il existe plusieurs approches permettant au client de connaître à chaque instant la position temporelle courante relative dans le programme. Certains serveurs, par exemple les serveurs Oracle, envoient des descripteurs temporels mélangés au programme, mais ce mécanisme n'est pas adopté par la totalité des serveurs. Une autre façon de faire consiste pour le client à utiliser la commande RTSP « GET_PARAMETER » pour obtenir du serveur la référence temporelle courante. Cette solution nécessite le temps de l'envoi de la requête et du retour de la réponse. C'est tout de même la méthode la plus couramment utilisée.

La norme MPEG, référencée « MPEG-2 System : ISO/IEC, 1994. Generic Coding of Moving Pictures and Associated Audio : Systems, (MPEG-2 Systems Specification), November, ISO/IEC 13818-1» décrit la façon de multiplexer du contenu multimédia en vue de sa restitution et de son transport. Un programme est séparé en flux élémentaires, chaque flux élémentaire étant découpé en paquets de données.

De façon à permettre la restitution du contenu, chaque entité au niveau des flux élémentaires, par exemple une image pour un flux vidéo se voit attribuer une référence temporelle, appelée PTS (« Presentation Time Stamp » en anglais). Cette référence temporelle, indique le moment où l'entité associée, ici l'image doit être restituée. La base de cette référence temporelle étant l'horloge de référence du système, une horloge à 90 kHz. Ce sont ces références temporelles qui permettent de synchroniser entre eux les différents flux élémentaires constituant le programme.

La succession de ces références temporelles de présentation dans le flux du programme n'est généralement pas continue du début du programme à la fin. En effet, un programme peut résulter de l'assemblage de plusieurs séquences ayant été encodées séparément et dont les références temporelles de présentation n'ont donc pas été calculées dans le même référentiel de temps. De plus, lors de l'utilisation des modes de restitution particuliers, une technique courante consiste à utiliser des versions encodées différemment pour différents modes. Par exemple, le serveur disposera d'une version du programme encodée en vitesse double dont il se servira s'il reçoit une commande d'avance rapide. Ici encore les différentes versions du programmes posséderont des références temporelles de présentation correspondant à différents référentiels de temps. Les références temporelles de présentation présentes dans le flux forment donc généralement une succession de séquences chacune de ces séquences correspondant à un référentiel de temps propre. Le standard ISO/EC 13818-6:1998, appelé DSM-CC (Digital Storage media command and control), décrit dans sa section 8.1.2 la reconstruction de la valeur NPT (Normal Play Time) par un récepteur à partir d'estampilles dans le flux reçu. Il s'agit donc de trouver une méthode fiable de repérage temporel relatif au sein du programme diffusé applicable par le client RTSP. Cette méthode ne reposant pas sur l'utilisation des descripteurs qui ne sont pas toujours présents dans le flux diffusé, ne nécessitant pas de requête vers le serveurs et permettant de faire face aux changements de référentiel de temps des séquences de références temporelles de présentation.

L'invention propose un procédé local au client d'envoi de commandes vers un serveur de VOD, par exemple selon RTSP, ces commandes comprenant une référence à la position courante relative. Cette position courante relative est maintenue par le récepteur sur la base des PTS reçus dans le flux MPEG, sans faire appel à une requête vers le serveur ni en se basant sur l'existence dans le flux de descripteur permettant de faire face aux ruptures de séquences dans les PTS inclus dans le flux. L'invention concerne également le client adapté pour mettre en oeuvre le procédé.

L'invention concerne un procédé et un récepteur selon les revendications attachées. L'invention sera mieux comprise, et d'autres particularités et avantages apparaîtront à la lecture de la description qui va suivre, la description faisant référence aux dessins annexés parmi lesquels :
La figure 1 représente l'architecture connue d'un service de VOD (« Video On Demand » en anglais).
La figure 2 représente l'architecture matérielle de l'exemple de réalisation du décodeur IP.
La figure 3 représente l'architecture logicielle de l'exemple de réalisation du décodeur IP.
La figure 4 représente un exemple de dialogue RTSP entre un client et un serveur.
La figure 5 représente un diagramme des images reçues lors d'une restitution à rythme normal avec les valeurs de PTS associées.
La figure 6 représente un diagramme des images reçues et des PTS associés lors d'une avance rapide.
La figure 7 représente un diagramme des images reçues et des PTS associés lors d'un passage d'une restitution à un rythme normal à une avance rapide.
La figure 8 représente un diagramme des images reçues et des PTS associés hors intervalle lors d'une restitution à rythme normal.
La figure 9 représente un diagramme des images reçues et des PTS associés lors du passage d'une restitution à rythme normal à une avance rapide avec changement d'intervalle.
La figure 10 représente un organigramme de la méthode de repérage temporel du décodeur.

Un exemple de réalisation de l'invention va maintenant être décrit.

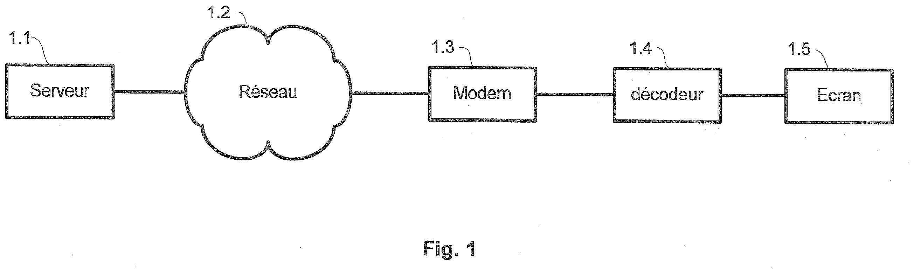

Cet exemple de réalisation de l'invention se place dans le contexte d'un système de service de vidéo à la demande (VOD pour « Video On Demand » en anglais). L'architecture générale d'un tel système est décrit à la figure 1. Le système comprend un ou plusieurs serveurs, référencés 1.1. Ces serveurs stockent les programmes à diffuser et peuvent les envoyer sous la forme de flux de données. Les utilisateurs du système, typiquement des particuliers abonnés au services vont disposer à leur domicile d'un écran de visualisation du service, référencé 1.5, d'un décodeur 1.4, typiquement un décodeur MPEG permettant le décodage du flux de données numérique reçu en signaux analogiques à destination de l'écran. Dans le contexte ici décrit, le décodeur est un décodeur IP adapté à la réception des programmes via un réseau IP, référencé 1.2. Le modem, référencé 1.3 permet de connecter le réseau de l'utilisateur au réseau de distribution IP 1.2 qui peut être Internet ou le réseau de distribution IP privé du fournisseur de service de vidéo à la demande. Dans un tel système, le décodeur sera le client RTSP qui commande la diffusion du programme par le serveur via le protocole RTSP en réponse aux demandes de l'utilisateur.

La norme MPEG définit la façon d'encoder et de multiplexer les différents flux élémentaires composant un programme multimédia. Ce programme, typiquement un programme audio vidéo, va se composer de différents flux élémentaires. On trouvera généralement un flux vidéo et un ou plusieurs flux audio. Chaque flux élémentaire va comprendre des entités, appelées unités de présentation dans la norme (« Presentation Unit » en anglais). Chacune de ses entités se verra associé une référence temporelle de présentation appelée PTS (« Presentation Time Stamp » en anglais) donnant dans le référentiel temporel de l'encodeur, c'est à dire selon son horloge système, le moment auquel cette entité ou unité de présentation devra être restituée par le décodeur. C'est la présence de ces références temporelles de présentation qui permettent, entre autre, de synchroniser les différents flux élémentaires lors de la restitution par le décodeur du programme. Dans le cas de la vidéo, l'entité ou unité de présentation sera typiquement l'image, tandis qu'il s'agira d'un échantillon dans le cas de l'audio.

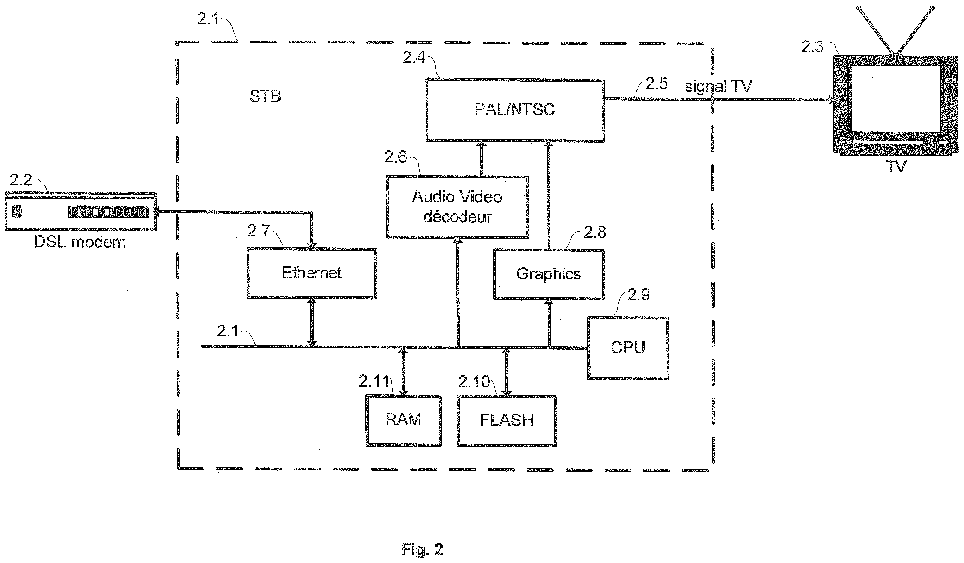

La figure 2 décrit l'architecture matérielle du décodeur MPEG de l'exemple de réalisation de l'invention. Ce décodeur, référencé 2.1, est connecté au modem, référencé 2.2, via une interface Ethernet, référencée 2.7. Il délivre les signaux analogiques issus du décodage des programmes à la TV référencée 2.5. Le décodeur fonctionne sous la direction d'un processeur central, référencé 2.9. Ce processeur exécute des programmes stockés dans une mémoire Flash référencée 2.10 en utilisant la mémoire vive, référencée 2.11 comme mémoire de travail. Le flux MPEG est reçu via le modem 2.2 et l'interface Ethernet 2.7, il est ensuite envoyé au décodeur audio et vidéo 2.6, ce décodeur va séparer les différents flux élémentaires et en effectuer un décodage s'ils sont encodés ainsi que les décompresser. Les flux audio et vidéo élémentaires décompressés sont ensuite envoyés à un convertisseur numérique vers analogique, référencé 2.4. Un processeur graphique référencé 2.8 est chargé de la génération de graphiques venant se superposer sur les images vidéo, il s'agit typiquement de graphiques d'interface utilisateur ou de données de guide de programme ou autre. le module de conversion numérique vers analogique 2.4 va produire les signaux analogiques comprenant les programmes ainsi que les graphiques. Ces signaux seront envoyés vers l'appareil de restitution du programme, typiquement un téléviseur référencé 2.3.

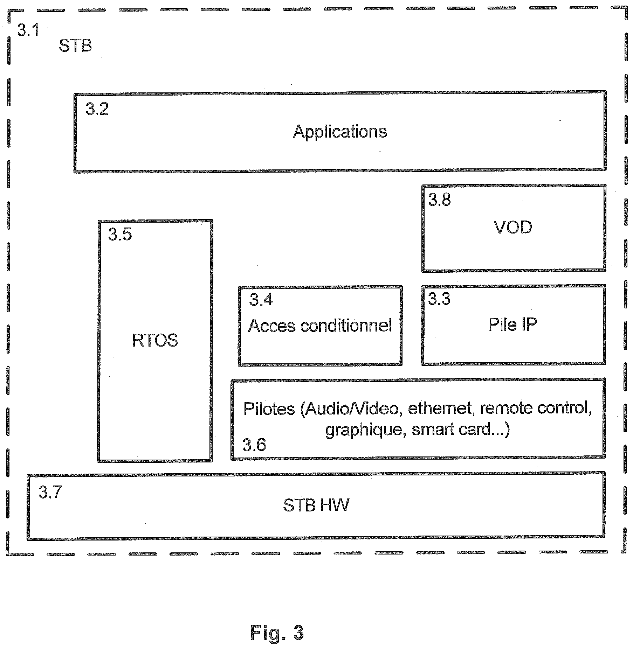

La figure 3 représente un schéma de l'architecture logicielle implémentée sur un tel décodeur selon l'exemple de réalisation de l'invention. On y trouve une couche de pilotes référencé 3.6 servant à piloter le matériel référencé 3.7. Un système d'exploitation temps réel RTOS (pour « Real Time Operating System » en anglais) assure le fonctionnement de base de l'appareil. Généralement, un module d'accès conditionnel référencé 3.4 sera chargé d'assurer que l'utilisateur possède les droits permettant de visualiser les programmes. Pour gérer les communications et particulièrement la réception des programmes, une pile de communication IP, référencée 3.3, permet le dialogue avec le réseau dont le serveur de vidéo à la demande. La gestion de l'accès au service de vidéo à la demande sera dédiée à un module VOD, référencé 3.8, couché au dessus d'IP et qui va gérer le dialogue avec le serveur de VOD, c'est au sein de ce module que l'on trouve les moyens de mise en oeuvre de l'invention selon l'exemple de réalisation décrit. Au plus haut niveau, l'on trouve un ensemble d'applications référencé 3.2 permettant d'offrir à l'utilisateur un ensemble de services parmi lesquels, une interface de choix de programme et souvent un guide de programmes.

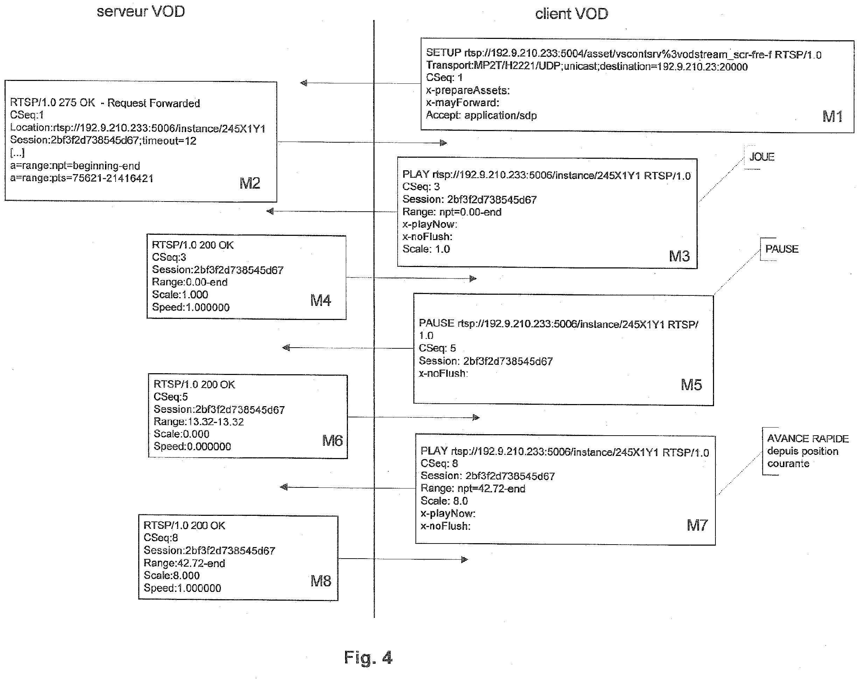

La figure 4 représente un exemple de dialogue entre le client et le serveur de VOD utilisant le protocole RTSP selon l'exemple de réalisation de l'invention. RTSP est un protocole client serveur permettant la gestion des commandes d'un serveur de diffusion temps réels de programmes. Ce protocole ne gère que les commandes, il ne prend pas en compte l'envoi des données qui se fait selon d'autres protocoles. Généralement RTSP est couplé avec l'envoi de données selon le protocole RTP (« Real time Transport Protocol » en anglais) décrit dans la RFC 1889. Mais le serveur est libre d'utiliser tout protocole de son choix dans l'envoi des données. On peut, par exemple, envoyer les données directement sur UDP (« User Datagram Protocol » en anglais, RFC 768), protocole sur lequel est basé RTP.

RTSP, offre la possibilité au client d'ouvrir une session sur le serveur via la commande « SETUP ». Cette session définit le programme demandé, la destination, le mode de transport ainsi que divers autres paramètres. Il permet ensuite de demander au serveur l'envoi des données pour une plage de programme, en précisant la vitesse de restitution, commande « PLAY ». Il est également possible de demander au serveur d'effectuer une pause dans l'envoi des données, commande « PAUSE ». La fin de la session intervient sur une commande « TEARDOWN ». La description complète de ce protocole se trouve référencée dans la RFC 2326.

Dans l'exemple de la figure 4, la client VOD, donc le décodeur, initialise une session par un message M1 contenant la commande « SETUP ». Cette commande précise que le client désire le programme dont l'adresse est rtsp://192.9.210.233:5004/asset/vscontsrv%3vodstream_scr-free-f en utilisant la version 1.0 du protocole RTSP en unicast via le protocole UDP vers l'adresse 192.9.210.23 sur le port 20000.

Le serveur va répondre par le message d'acceptation M2. On voit ici que le serveur envoie un argument « a=range:pts=75621-2146421 », cet argument précise que le programme envoyé contient des références temporelles de présentation démarrant à la valeur 75621 et finissant à la valeur 2146421. Cette information peut être utilisée par le client pour ultérieurement se situer temporellement dans le programme. En effet, une référence temporelle de présentation reçue devrait permettre de situer l'entité de programme associée par rapport à ces bornes que l'on nomme « PTS_start » et « PTS_end ». Nous verrons que malheureusement, tous les serveurs n'envoient pas cet argument et que même quand on en dispose, les références temporelles trouvées dans le programme diffusé ne sont pas toujours calculées dans le même référentiel que cet intervalle retourné en acceptation du « SETUP ».

Le client est ensuite en mesure de demander au serveur de commencer l'envoi du programme par l'envoi du message M3 contenant une commande « PLAY ». La commande « PLAY » doit contenir une indication de la plage de programme que l'on souhaite recevoir. Cette plage peut être la totalité du programme, c'est ici le cas, ce qui est indiqué par l'argument « Range: npt=0.00-end ». Il existe plusieurs manières d'indiquer une plage de programme, plusieurs manière d'indiquer le temps, l'exemple utilise la notation NPT (« Normal Play Time » en anglais) qui indique la position temporelle dans le flux relativement au début du programme sous la forme d'une fraction décimale. La partie gauche de la fraction donne le temps en seconde ou en heure, minute et seconde, tandis que la partie droite mesure des fractions de secondes. Le message M3 demande donc la diffusion du programme entier de son début « 0.00 » à la fin « end ».

Le message M4, est une acceptation du message M3.

Un peu plus tard, en cours de diffusion, le client demande une pause via le message M5. Cette pause est acceptée via le message M6.

Le message M7, quant à lui, est un message qui demande une avance rapide à 8 fois la vitesse normale à partir du point courant du programme. L'argument de plage utilisé est donc « Range: npt=42.72-end » et la vitesse de jeu demandée est passée via l'argument « Scale: 8.0 ». Le message M8 est une acceptation du message M7.

L'exemple de communication ci-dessus nous montre l'importance de la localisation temporelle dans le flux diffusé pour le décodeur. En effet, par exemple lorsque le décodeur demande un passage en avance rapide à la vitesse 8 comme dans le message M7, il doit donner le point de départ de la plage demandée. Ce point de départ doit correspondre exactement au point courant de la diffusion du programme pour que l'utilisateur ne perçoive pas de saut lors du changement de mode.

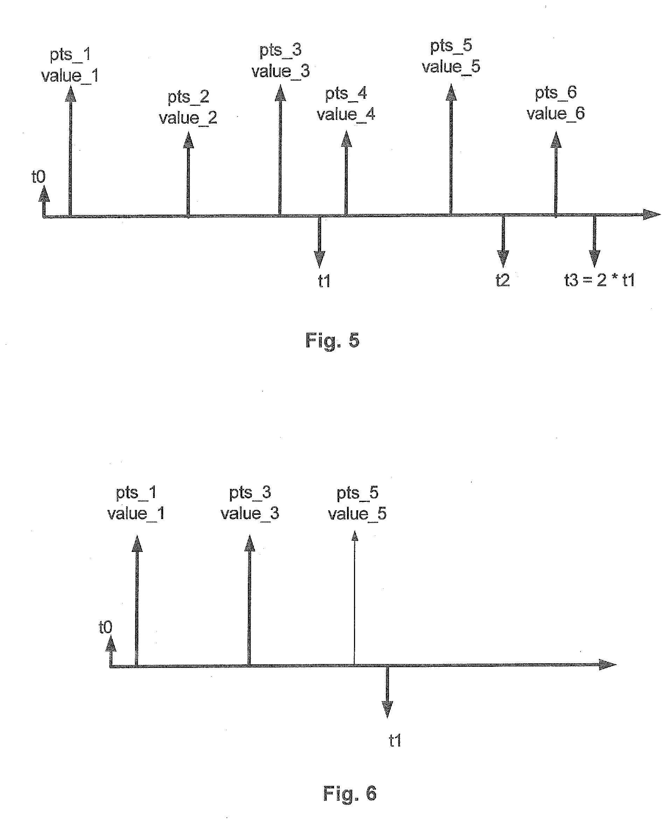

Il existe différents moyens pour le décodeur de connaître la position temporelle courante dans le flux. On a vu dans l'exemple que le serveur, lorsqu'il acquitte la commande « SETUP » donne les bornes des références temporelles de présentation utilisées dans le flux diffusé. Ces bornes sont appelées PTS_Start et PTS_End. Hors le flux MPEG diffusé contient des références temporelles de présentation associées aux images du programme comme illustré figure 5. Sur cette figure chaque flèche représente une image reçue lors de la diffusion d'un programme avec la valeur de référence temporelle de présentation associée. La diffusion démarrant au temps T0, la première image reçue sera associée au PTS_1 ayant la valeur value_1. La seconde image reçue sera associée au PTS_2 ayant la valeur value_2 et ainsi de suite. En toute logique la valeur value_1 correspond à PTS_Start. Dans ce schéma, il est possible de se situer dans le temps par rapport au début du programme en fonction de la dernière référence temporelle de présentation reçue, il suffit de soustraire à cette dernière valeur de PTS, la valeur stockée de PTS_Start pour connaître le temps relatif courant par rapport au début du programme. Ce temps sera connu à la précision de l'horloge de 90 kHz utilisée pour générer les PTS.

La figure 6 illustre une avance rapide en vitesse double de la normale. On voit ici que l'on reçoit une image sur 2 avec les références temporelles associées. La première image est donc associée à un PTS de valeur value_1, tandis que la seconde correspond à la troisième image du programme joué à vitesse normale et est associée à un PTS de valeur value_3 correspondant au moment de présentation de cette troisième image si le flux était joué à une vitesse normale. On voit, donc que ici encore un positionnement basé sur la différence du dernier PTS reçu avec le PTS_Start nous donne encore le temps relatif courant par rapport au début du programme.

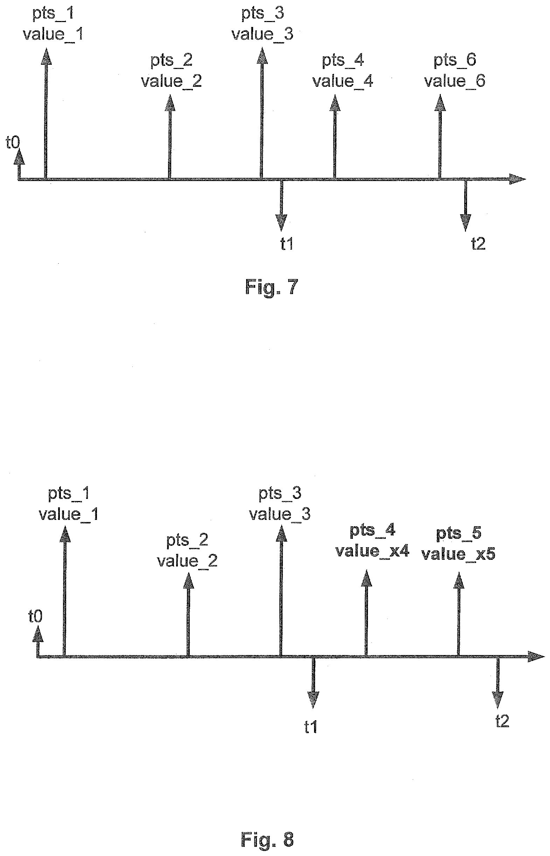

La figure 7 illustre le cas où un passage en mode vitesse double se produit en cours de diffusion à l'instant t1. Ici encore, que l'on se place entre t0 et t1, pendant la diffusion à vitesse normale ou entre t1 et t2 pendant la diffusion en vitesse double, la même technique donne encore un temps relatif courant par rapport au début du programme fiable.

Malheureusement, on constate d'une part que tous les serveurs ne donnent pas l'information de plage des PTS lors de l'acquittement d'une commande « SETUP ». De plus, même dans le cas où le serveur donne bien cette plage, il s'avère que les références temporelles de présentation contenues dans le flux reçu sont parfois calculées dans un référentiel temporel différent du référentiel utilisé pour le calcul des valeurs de PTS_Start et PTS_End communiquées par le serveur. Il arrive également que le programme diffusé soit l'assemblage de plusieurs séquences ayant été encodées séparément. Dans ce cas, généralement, chaque séquence possède des références temporelles de présentation calculées dans son propre référentiel temporel. Il s'ensuit des changements de référentiel au cours de la diffusion. Cette situation est décrite dans la figure 8, ici les valeurs appelées value_1, value_2 et value_3 correspondent à une première séquence. Un changement de séquence intervient à l'instant t1. Les valeur appelée value_x4 et value_x5 correspondent à une seconde séquence. Chaque séquence ayant été encodée dans son propre référentiel, une rupture de séquence intervient entre les deux.

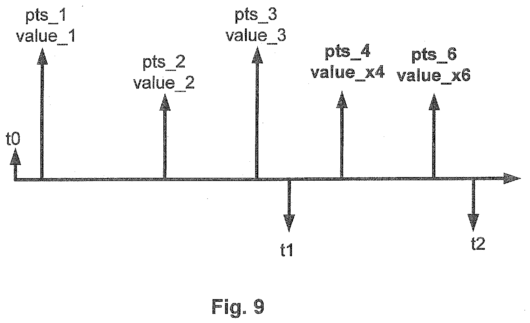

De même, les serveurs peuvent s'appuyer sur des versions différentes du programme pour implémenter les modes de restitution particuliers comme l'avance rapide ou le retour arrière. Dans ce cas le serveur va disposer d'une version du programme pour la diffusion normale et de versions encodées à différentes vitesses pour répondre aux demandes de restitution à vitesse lente où accélérée. Par exemple une version différente contenant une image sur deux sera utilisée pour la diffusion à vitesse double. Ici encore, chaque version possédera généralement des références temporelles de présentation calculées dans un référentiel temporel différent. Cette situation est illustrée figure 9. Sur cette figure, une demande de restitution rapide en vitesse double intervient à l'instant t1, les valeurs de PTS value_x4 et value_x6 sont dans un différentiel temporel différent des valeurs value_1, value_2 et value_3 du flux diffusé à vitesse normale entre t0 et t1.

Une des solutions à ces problèmes de ruptures de séquence est l'insertion de « NPT descriptor » comme décrit au chapitre 8 du standard DSM-CC (ISO/IEC 13818-6). Ces descripteurs sont insérés dans le flux au moment de la rupture de séquence et indique la correspondance entre les références temporelles de présentation de la séquence et un référentiel logique pour le flux. Mais tous les serveurs n'utilisent pas cette possibilité.

Une autre façon de résoudre ces problèmes consiste à ne pas utiliser les références temporelles reçues mais à demander au serveur la valeur du temps relatif courant à chaque fois que l'on en a besoin. Un mécanisme existe dans RTSP pour demander des paramètres au serveur sous la forme d'une commande « GET_PARAMETER ». Dans ce cas, avant d'émettre une commande devant utiliser un argument de plage comme la commande « PLAY » le client demande, à l'aide de la commande « GET_PARAMETER » la position courante temporelle relative du flux. Cette méthode est généralement fonctionnelle mais introduit un délai correspondant à l'envoi de la commande et au retour du résultat ainsi que l'utilisation correspondante de la bande passante.

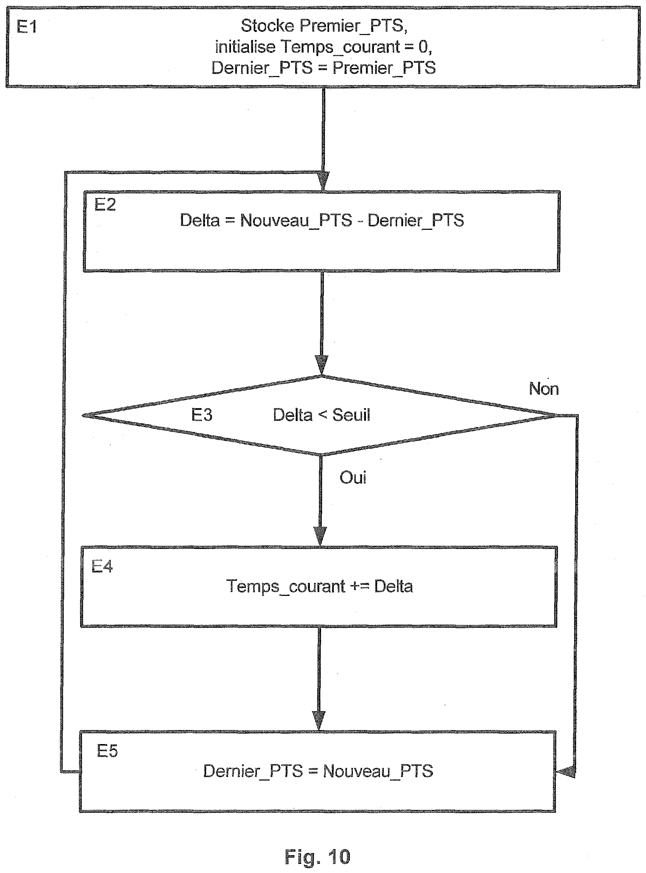

Nous allons maintenant décrire un exemple de procédé fiable de calcul local de la position temporelle relative courante du flux, ne nécessitant pas l'insertion de descripteurs par le serveur ni l'envoi d'une requête au serveur. Ce procédé, permet également de faire face à des ruptures de séquences dans les références temporelles de présentation. Ce procédé est illustré figure 10. Il va consister à maintenir une valeur courante relative au début du programme et à mettre cette valeur à jour en fonction des valeurs de références temporelles reçues. Cette méthode est décrite figure 10. Lors d'une première étape E1, effectuée au début de la diffusion du programme, on mémorise le premier PTS reçu, dans une variable Premier_PTS. On initialise une variable Temps_courant à 0. Cette variable contiendra à tout moment la position temporelle courante relative dans le programme. On initialise également la variable Dernier_PTS, correspondant à la valeur du dernier PTS reçu, à la valeur du premier PTS.

Ensuite, lorsque l'on reçoit une nouvelle valeur de PTS dans le flux, on effectue l'étape E2. Cette étape consiste à calculer la différence entre ce nouveau PTS reçu et le précédent mémorisé dans Dernier_PTS. Cette information est mémorisée dans une variable Delta.

Dans le but de détecter les ruptures de séquences, la valeur de Delta est comparée à un seuil. En effet, les références temporelles de présentation étant associées à des entités du flux, typiquement aux images vidéo, on est à même de déterminer la différence attendue entre deux valeurs successives de PTS reçus. Cette différence est typiquement la fréquence image exprimée selon une horloge de 90 kHz. Il faut, bien sûr, tenir compte de la vitesse de restitution courante. On peut donc déterminer un seuil Seuil, par exemple égal à deux fois la fréquence image, ou la fréquence image multiplié par la vitesse maximum du serveur plus un coefficient de sécurité. Lorsque la valeur Delta est supérieure à ce seuil, on estime être en présence d'une rupture de séquence. Dans le cas contraire, on estime qu'il n'y a pas de rupture de séquence. En l'absence de rupture de séquence, on effectue l'étape E4, consistant à accumuler la valeur Delta dans le temps courant. Dans tous les cas, on effectue une mise à jour de la valeur du dernier PTS reçu avec la valeur du nouveau PTS à l'étape E5. On boucle ensuite à nouveau sur l'étape E2 à la réception d'une nouvelle référence temporelle de présentation dans le flux.

De cette manière, la variable Temps_courant contient à tout moment une accumulation des différences entre les références temporelles appartenant à une même séquence. A la rupture de séquence aucun temps n'est accumulé.

Lorsque le décodeur doit envoyer une commande au serveur nécessitant une plage dont l'une des bornes est le temps courant il utilisera cette valeur comme base du temps courant. Le calcul d'une valeur NPT en seconde est direct et correspond à Temps_courant divisé par la fréquence image.

Dans les modes de restitution particuliers où le flux n'est pas joué à vitesse normale, c'est-à-dire les modes de ralenti ou de vitesse accéléré, le procédé décrit fait l'hypothèse que les références temporelles de présentation insérées dans le flux sont les références temporelles calculées pour une restitution à vitesse normale. En effet, la différence entre deux PTS est considérée comme représentant la différence temporelle dans le programme entre les deux entités correspondantes lors d'une restitution en mode normal. Il s'avère que certains serveurs, par soucis de respect de la norme MPEG, vont générer de nouvelles références temporelles de présentation dans les modes de restitution à vitesse modifiée par rapport à la vitesse normale. Par exemple, en vitesse accélérée d'un facteur 4, deux images successives correspondant à deux images séparées par 3 autres images dans le flux destiné au mode normal, vont se voir attribuer des valeurs de PTS séparées de la fréquence image en lieu et place des valeurs de PTS calculées dans le flux destiné au mode normal et séparées de 4 fois la fréquence image. Une variante du procédé décrit consiste à comparer, lors d'une restitution à vitesse modifiée, la différence entre deux valeurs de référence temporelle avec la fréquence image. Si cette différence est voisine de la fréquence image au lieu d'en être le produit par la vitesse de restitution, le delta sera multiplié par la vitesse avant d'être accumulé au temps courant.

L'exemple de réalisation de l'invention est basé sur les références temporelles de présentation de MPEG ainsi que sur l'utilisation du protocole RTSP utilisant des plages définies sous la forme NPT, mais l'invention se généralise à d'autres types de références temporelles incluse dans un flux de données numérique ainsi qu'à d'autres protocoles de commandes de serveurs et ceci quelle que soit la méthode de codage des données temporelles utilisées par ce protocole. L'exemple de réalisation est basée sur la diffusion du flux sur un réseau IP, mais l'invention peut s'étendre à d'autre types de réseaux.

## Revendications

1. Procédé de calcul d'une position temporelle relative courante dans un programme compris dans un flux de données numériques diffusé par un serveur, **caractérisé en ce que** le procédé est mis en oeuvre par un récepteur dudit flux de données numériques et que le procédé comprend :
• réception d'un flux de données numériques correspondant audit programme, comprenant des références temporelles de présentation ;
• suite à la réception d'une nouvelle référence temporelle de présentation comprise dans ledit programme, calcul (E2) d'une différence entre la nouvelle référence temporelle de présentation et une référence temporelle de présentation reçue précédemment ;
• si la différence est inférieure à un seuil déterminé (E3), ledit seuil étant dépendant d'une vitesse de restitution du programme par le récepteur, ajout (E4) de la différence à ladite position temporelle relative courante de temps;
• remplacement (E5) de la référence temporelle de présentation reçue précédemment avec la nouvelle référence temporelle de présentation.

2. Procédé selon la revendication 1, comprenant une étape de transmission d'une commande au serveur comprenant une valeur de temps exprimé en Normal Play Time, ladite valeur étant obtenue par division de ladite position temporelle relative courante par une fréquence d'image des données numériques reçues.

3. Procédé selon la revendication 1 ou 2, comprenant une étape de comparaison, pendant une restitution du programme à vitesse modifiée, de la différence avec la fréquence d'image et, si la deuxième différence est plus proche de ladite fréquence d'image qu'un produit de ladite fréquence d'image par la vitesse de restitution, multiplication de la différence avec la vitesse modifiée.

4. Récepteur de flux de données numériques **caractérisé en ce que** le récepteur comprend :
• un moyen de réception d'un flux de données numériques correspondant audit programme, comprenant des références temporelles de présentation;
• un moyen de calcul, suite à la réception par le moyen de réception d'une nouvelle référence temporelle de présentation comprise dans ledit programme, d'une différence entre la nouvelle référence temporelle de présentation et une référence temporelle de présentation reçue précédemment;
• un moyen d'ajout de ladite différence à ladite position temporelle relative courante de temps si la différence est inférieure à un seuil déterminé, ledit seuil étant dépendant d'une vitesse de restitution du programme par le récepteur;
• un moyen de remplacement de la référence temporelle de présentation reçue précédemment avec la nouvelle référence temporelle de présentation.

5. Récepteur selon la revendication 4, comprenant un moyen de transmission d'une commande au serveur comprenant une valeur de temps exprimé en Normal Play Time, ladite valeur étant obtenue par division de ladite position temporelle relative courante par une fréquence d'image des données numériques reçues.

6. Récepteur selon la revendication 4 ou 5, comprenant un moyen de comparaison pour comparer, pendant une restitution à vitesse modifiée, la différence avec la fréquence d'image et un moyen de multiplication de la différence avec la vitesse modifiée si la deuxième différence est plus proche de ladite fréquence d'image que d'un produit de ladite fréquence d'image par la vitesse de restitution.

## Patentansprüche

1. Verfahren zur Berechnung einer aktuellen relativen Zeitposition in einem Programm, enthalten in einem durch einen Server verbreiteten Digitaldatenfluss, **dadurch gekennzeichnet, dass** das Verfahren durch einen Empfänger des besagten Digitaldatenflusses umgesetzt wird und dass das Verfahren umfasst:
• Empfang eines Digitaldatenflusses entsprechend dem besagten Programm, das Präsentationszeitstempel (PTS) umfasst;
• nach dem Empfang eines in dem besagten Programm enthaltenen neuen PTS, Berechnung (E2) einer Differenz zwischen dem neuen PTS und einem vorher erhaltenen PTS;
• wenn die Differenz unterhalb einer bestimmten Schwelle (E3) liegt, wobei die besagte Schwelle von einer Wiedergabegeschwindigkeit des Programms durch den Empfänger abhängig ist, Ergänzung (E4) der Differenz zu der besagten aktuellen relativen Zeitposition;
• Austausch (E5) des vorher empfangenen PTS durch den neuen PTS.

2. Verfahren nach Anspruch 1, das einen Schritt zur Übertragung eines Befehls an den Server umfasst, umfassend einen in Normal Play Time ausgedrückten Zeitwert, wobei der besagte Wert durch Teilung der besagten aktuellen relativen Zeitposition durch eine Bildfrequenz der empfangenen Digitaldaten erhalten wird.

3. Verfahren nach Anspruch 1 oder 2, umfassend einen Schritt zum Vergleichen, während einer Wiedergabe des Programms bei geänderter Geschwindigkeit, der Differenz mit der Bildfrequenz, und, wenn die zweite Differenz näher an der besagten Bildfrequenz ist als ein Produkt der besagten Bildfrequenz mit der Wiedergabegeschwindigkeit, Multiplikation der Differenz mit der geänderten Geschwindigkeit.

4. Empfänger von Digitaldatenflüssen, **dadurch gekennzeichnet, dass** der Empfänger umfasst:
• ein Mittel zum Empfang eines Digitaldatenflusses entsprechend dem besagten Programm, das PTS umfasst;
• ein Mittel zur Berechnung, nach dem Empfang durch das Mittel zum Empfang eines neuen PTS, der in dem besagten Programm enthalten ist, einer Differenz zwischen dem neuen PTS und einem vorher empfangenen PTS;
• ein Mittel zur Ergänzung der besagten Differenz zu der besagten aktuellen relativen Zeitposition, wenn die Differenz unterhalb einer bestimmten Schwelle liegt, wobei die besagte Schwelle von einer Wiedergabegeschwindigkeit des Programms durch den Empfänger abhängig ist;
• ein Mittel zum Austausch des vorher empfangenen PTS durch den neuen PTS.

5. Empfänger nach Anspruch 4, der ein Mittel zur Übertragung eines Befehls an den Server umfasst, umfassend einen in Normal Play Time ausgedrückten Zeitwert, wobei der besagte Wert durch Teilung der besagten aktuellen relativen Zeitposition durch eine Bildfrequenz der empfangenen Digitaldaten erhalten wird.

6. Empfänger nach Anspruch 4 oder 5, umfassend ein Mittel zum Vergleichen, um während einer Wiedergabe bei geänderter Geschwindigkeit die Differenz mit der Bildfrequenz zu vergleichen, und ein Mittel zur Multiplikation der Differenz mit der geänderten Geschwindigkeit, wenn die zweite Differenz näher an der besagten Bildfrequenz ist als ein Produkt der besagten Bildfrequenz mit der Wiedergabegeschwindigkeit.

## Claims

1. Method for calculating a relative current time position in a program included in a digital data stream broadcast by a server, **characterized in that** the method is implemented by a receiver of said digital data stream and the method comprises:
• receiving a stream of digital data corresponding to said program, comprising presentation time references;
• after receiving a new presentation time reference comprised in said program, calculating (E2) a difference between the new presentation time reference and a previously received presentation time reference;
• if the difference is less than a predetermined threshold (E3), said threshold being dependent on a rate of restitution of the program by the receiver, adding (E4) the difference to said relative current time position;
• replacing (ES) the presentation time reference previously received with the new presentation time reference.

2. A method according to claim 1, comprising a step of transmitting a command to the server comprising a time value expressed in Normal Play Time, said value being obtained by dividing said current relative time position by a frame rate of the data received.

3. A method according to claim 1 or 2, comprising a step of comparing the difference with the frame rate during restitution of the modified speed program and if the second difference is closer to said image frequency than a product of said frame rate by the reproduction rate, multiplying the difference with the modified speed.

4. A digital data stream receiver **characterized in that** the receiver comprises:
• a means for receiving a stream of digital data corresponding to said program, comprising presentation time references;
• a calculation means, following receipt by the receiving means of a new presentation time reference included in said program, of a difference between the new presentation time reference and a previously received presentation time reference;
• means for adding said difference to said current time relative time position if the difference is less than a determined threshold, said threshold being dependent on a rate of restitution of the program by the receiver;
• means of replacing the presentation time reference previously received with the new presentation time reference.

5. The receiver as claimed in claim 4, comprising means for transmitting a command to the server comprising a time value expressed in Normal Play Time, said value being obtained by dividing said current relative time position by a frame rate of the data received.

6. The receiver as claimed in claim 4 or 5, comprising comparison means for comparing the difference with the frame rate during a modified speed reproduction and means for multiplying the difference with the modified speed if the second difference is closer to said image frequency than a product of said frame rate by the playback speed.
